Europäisches Patentamt

European Patent Office

Office européen des brevets

(19)

(11) Numéro de publication: **0 168 332**
**B1**

(12) **FASCICULE DE BREVET EUROPEEN**

(45) Date de publication du fascicule du brevet: **30.05.90**

(51) Int. Cl.⁵: **B 29 C 71/02, C 08 J 7/00**

(21) Numéro de dépôt: **85420090.4**

(22) Date de dépôt: **13.05.85**

(54) Procédé de recuisson des produits élastomères et plastomères par application simultanée de la chaleur et du vide en l'absence d'oxygène et élastomères et plastomères obtenus.

(30) Priorité: **14.05.84 FR 8407828**

(43) Date de publication de la demande:
**15.01.86 Bulletin 86/03**

(45) Mention de la délivrance du brevet:
**30.05.90 Bulletin 90/22**

(84) Etats contractants désignés:
**AT BE CH DE GB IT LI LU NL SE**

(56) Documents cités:
**EP-A-0 006 341**
**CH-A-300 954**
**FR-A-1 086 046**
**GB-A-2 021 595**

**CHEMICAL ABSTRACTS, volume 77, no. 4, 24 juillet 1972, page 85, abrégé 21137e, Columbus, Ohio, US; S.P. GUKALOV et al.:"Effect of temperature on the generation of gas by some thermoplastic materials in sealed-off vacuum systems"**

(73) Titulaire: **GERLAND S.A.**
**50, cours de la République**
**F-69625 Villeurbanne Cédex (FR)**

(72) Inventeur: **Toullec, Lucien**
**97 rue Fenelon**
**F-69006 Lyon (FR)**

(74) Mandataire: **Maureau, Philippe et al**
**Cabinet Germain & Maureau Le Britannia - Tour C 20, bld Eugène Déruelle**
**F-69003 Lyon (FR)**

(56) Documents cités:

**IEEE TRANSACTIONS ON POWER APPARATUS AND SYSTEMS, volume PAS-94, no. 4, juillet-aou7t 1975, pages 1258-1263, The Institute of Electrical & Electrnical Inc., New York, US; S.**

**KAGEYAMA et al.: "Microvoids in crosslinked polyethylene inslated cables"**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 168 332 B1

Courier Press, Leamington Spa, England.

# EP 0 168 332 B1

**Description**

La présente invention concerne un procédé de recuisson des produits en élastomères et plastomères par application simultanée de la chaleur et du vide, en l'absence d'oxygène ainsi que les élastomères et plastomères obtenus.

On sait que la rétification des mélanges à base d'élastomères permettant d'obtenir un réseau stable et doué d'élasticité est obtenue par une réaction chimique créant des ponts, des liaisons entre les macromolécules. Ces liaisons sont relativement courtes par rapport à la longueur développée des macromolécules de polymère, copolymère ou terpolymère; il s'agit de liaisons entre des groupements chimiques situés le long des chaînes principales adjacentes ou bien, dans des cas particuliers, d'une liaison entre bouts de chaînes.

Cette opération de rétification est réalisée en moule chauffé, ou pour les profilés, tubes et tissus enduits, dans des fours-tunnels chauffés par tout moyen classique: rayonnements infra-rouges, air chaud, bain de sels fondus, bain d'huile, rayonnements en ultra-haute fréquence, lit fluidisé, etc. ... Cette opération de cuisson est également parfois effectuée en autoclave à vapeur.

Dans certains cas de catalyse spéciale, notamment dans le cas des mastics ou des produit bicomposants de coulée, cette rétification peut également être effectuée à température ordinaire.

Il est de plus indispensable, et notamment quand il s'agit d'élastomères doués d'une bonne stabilité thermique, tels que les élastomères polysiloxaniques ou les élastomères fluorocarbonés, de procéder à l'elimination par volatilisation de nombreux éléments dont les principaux sont rappelés ci-après:

restes ou produits de décomposition des agents de rétification, des inhibiteurs, des stabilisants, des retardateurs, des accélérateurs ou des produits les véhiculant. Certains de ces produits, s'ils subsistaient dans les objets, pourraient avoir une action néfaste sur le vieillissement à chaud ou sur certaines propriétés physiques ou mécaniques des objets comme on le verra plus loin; d'autre part, des composés formés pendant la rétification sont insolubles dans les vulcanisats et migrent à la surface des objets sous forme d'efflorescences indésirables,

produits chimiques nouveaux formés par réaction entre des composants de la formule du mélange,

adjuvants ayant servi à faciliter la mise en oeuvre des mélanges non vulcanisés, par exemple plastifiants, mais dont la présence n'est plus nécessaire dans les vulcanisats ou exercent même un effet adverse sur les propriétés physiques et mécaniques, tels que abaissement de la résilience et augmentation de la déformation rémanente à la compression,

unités polymériques à bas poids moléculaires; elles jouent en quelque sorte le rôle de plastifiants avec les mêmes inconvénients que ceux mentionnés dans le paragraphe ci-dessus,

humidité, radicaux hydroxylés ou radicaux organiques présents à la surface des charges.

Dans le cas où il et nécessaire d'obtenir des objets utilisables en médecine ou un chirurgie, ou pouvant sans inconvénient être au contact avec des produits pharmaceutiques injectables ou des produits alimentaires, cet elèvement des matières volatiles est également indispensable. La purification des pièces en élastomères s'est avérée de première importance dans le cas de leur implantation dans le corps humain, ceci afin d'éliminer la toxicité vis-à-vis des tissus et d'obtenir une parfaite tolérance cytologique et biologique.

Cette élimination est effectuée au moyen d'une deuxième cuisson, appelée recuisson ou stabilisation, réalisée généralement dans des fours à air ventilé, avec renouvellement d'atmosphère et ceci pendant des durées longues (par exemple de 4 à 36 heures) et à des températures élevées (par exemple de 175 à 280°C).

Ce chauffage prolongé doit, bien entendu, être effectué à une température compatible avec la nature et la stabilité thermique des produits à traiter. Par exemple, les élastomères organiques des types: NBR, IIR, EPR, EPDM, polyacrylates ... ne peuvent être chauffés sans dommage notable qu'à des températures maximales de 150 à 175°C. Or, de tels produits seraient avantageusement purifiés et dévolatilisés lorsque la destination des objets concerne le domaine médical ou alimentaire, ou encore dans le cas de pièces pour engins spatiaux. Il en est de même de pièces composites comprenant des matériaux ayant des stabilités thermiques différentes, où sans pouvoir atteindre une dévolatilisation suffisante ou une stabilisation satisfaisante de tous les constituants, il faudra limiter la température de traitement à celle supportée par la matière la plus fragile.

Par contre, les élastomères polysiloxaniques et fluorocarbonés supportent pendant 8 à 96 heures des températures allant de 200 à 275°C. La durée du traitement thermique est relativement longue, ne serait-ce que pour obtenir la diffusion des matières volatiles ou volatilisables du coeur vers l'extérieur de la pièce.

Pendant cette recuisson, il se développe également des liaisons entre les chaînes de polymères et les sits atifs de la surface des particules de charge renforçante (silice pyrogénée, noir de carbone ...). Ce phénomène participe au renforcement et il y a donc lieu de rechercher l'obtention de cette amélioration. En quelque sorte l'obtention de des liaisons, ajoutée à l'enlèvement des produits mentionnés ci-dessus, participe à la stabilisation des propriétés physiques, chimiques et mécaniques des vulcanisats et des polycondensats.

On a, d'autre part, constaté qu'au cours du traitement thermique prolongé en four à air, on amorce le vieillissement des mélanges, élastomériques par oxydation ou par cracking thermique. Il en résulte que la dévolatilisation pourrait se poursuivre jusqu'à une dégradation totale des produits. Par conséquent, même après la recuisson, réalisée suivant le procédé classique en four à air ventilé, le produit contient des traces

2

non négligeables de matières volatiles déjà formées par oxydation, cracking ou en voie de formation.

Or, dans certaines utilisations, il est nécessaire de fournir des pièces pratiquement exemptes de matières volatiles, ceci afin d'éviter, qu'en service, ces matières volatiles se dégagent, conduisant ainsi à une modification des caractéristiques physiques et mécaniques des pièces et surtout que ces produits puissent migrer et aller se condenser sur d'autres pièces adjacentes ou proches.

C'est, par exemple, le cas de pièces telles que câbles électriques, joints élémentes isolants éléctriques, tubulures, amortisseurs ... utilisés dans les engins lancés dans l'espace (fusées, satellites, stations orbitales).

Dans le même ordre d'idées, on rencontre tous les jours des problèmes avec les joints de hublots des projecteurs à forte puissance tels que ceux utilisés dans les stades sportifs ouverts ou "indoor", les aérodromes, les installations ferroviaires. Les matières volatiles subsistant dans le joint sont distillées, migrent et se déposent sur la paroi arrière réfléchissante, voire sur la vitre, entraînant ainsi une opacification et une perte du pouvoir réfléchissant ou transmetteur des éléments concernés.

Le même inconvénient a pu être observé sur les fours industriels, les cuisinières où des matières volatiles émanant des joints en élastomères silicones sont venues se déposer sous forme de dépôt blanchâtre sur les parois internes des doubles vitres: or, ces parois ne sont pas accessibles pour le nettoyage.

Des problèmes de ce type se posent également lors de l'emploi de plastomères et plus spécialement de matières plastiques résistant à la chaleur. C'est ainsi que des condensats de matières volatiles peuvent se déposer sur des contacts électriques à la surface desquels ils viennent constituer des films isolants dont la haute résistivité superficielle entraîne une mauvaise conduction. On a même constaté une attaque par corrosion du cuivre constitutif du matériel en question.

Pour tenter de remédier à ces inconvénients, on a proposé soit de prolonger la durée de recuisson, soit d'augmenter la température du traitement thermique. On a parfois constaté des améliorations, mais généralement, il se forme progressivement et régulièrement de nouvelles matières volatiles dont la diffusion du coeur vers l'extérieur ne s'opère pas complètement.

La présente invention s'est donnée pour objet de pallier ces inconvénients en proposant un nouveau procédé de recuisson permettant une élimination pratiquement totale des matières volatiles sans pour autant faciliter la production par cracking thermique ou par cracking avec oxydation de petites molécules distillables.

Selon l'invention, le procédé de recuisson par action de la chaleur et du vide de produits en élastomères rétifiés ou en plastomères résistant à la chaleur, se caractérise par la réalisation des étapes successives suivantes:

introduction des produits dans une enceinte sous vide calorifugée

pompage de l'air dans l'enceinte, jusqu'à obtention d'une pression comprise entre 0,01 et 200 mbars, de préférence entre 0,1 et 1 mbar

introduction dans l'enceinte d'un gaz inerte jusqu'à une pression voisine de la pression atmosphérique, par exemple comprise entre 0,8 et 1,2 bars

chauffage dans l'enceinte sous atmosphère inerte des produits ou pièces en lesdits produits, à une température comprise entre 140 et 260°C

pompage pour obtention et maintien dans l'enceinte d'une pression comprise entre 0,01 et 200 mbars, de préférence entre 0,1 et 1 mbar, notamment pendant une durée comprise entre 10 et 60 minutes

introduction dans l'enceinte du gaz inerte jusqu'à une pression voisine de la pression atmosphérique, par exemple comprise entre 0,8 et 1,2 bars

refroidissement de l'enceinte

enlèvement des produits de l'enceinte.

Le gaz inerte utilisé selon l'invention a un triple but:

remplacer l'air et donc l'oxygène, lequel pourrait réagir ou dégrader le polymère, ou bien les adjuvants tels que ceux cités précédemment

éviter la formation d'un mélange gazeux détonant avec les matières volatilisées pendant le chauffage

constituer le gaz caloporteur permettant les opérations de chauffage puis de refroidissement des pièces en élastomère et en platomère.

Selon un mode de réalisation préféré de l'invention, le gaz inerte doit être peut coûteux, d'un emploi aisé et non dangereux. L'azote, le dioxyde de carbone et l'hélium répondent par exemple à ces exigences.

Les moyens de chauffage et refroidissement associés à l'enceinte agiront de préférence par convection, ce qui nécessite la présence d'une atmosphère suffisante du point de vue pression absolue.

Après l'étape de chauffage en atmosphère inert, la durée d'application du vide est de préférence comprise entre 10 et 60 minutes. Mais ces valeurs ne constituent pas des limites retrictives car en fonction du résultat recherché (dévolatilisation normale comme dans le procédé à air chaud ou bien extrêmement poussée) ou de la géométrie des pièces à traiter (épaisseur, distance entre le coeur de l'objet et la surface), il peut être nécessaire de jouer sur la vitesse de progression du vide, sur sa valeur finale et sur la durée du traitement.

Au cours de cette étape, la température chute notablement en raison du caractère endothermique de toute volatilisation.

La présente invention sera mieux comprise et ses avantages ressortiront bien des exemples suivants qui l'illustrent sans la limiter.

Exemple 1

Un joint profilé de double vitre de cuisinière domestique réalisé avec de l'élastomère silicone RHODORSIL RP 60 THT (agent rétifiant: 1,25% de peroxyde de dichloro-2-4-benzoyle flegmatisé à 50% avec de l'huile diméthyl-polysiloxanique de viscosité 300 centistokes) de la Société RHONE POULENC est extrudé et rétifié pendant 32 secondes à 265°C dans un tunnel à air chaud circulant.

On le divise en cinq échantillons:

échantillon 1A: ne subit pas de traitement,

échantillon 1B: ayant subi une recuisson en four à air ventilé avec montée en quatre heures à 200°C + palier de huit heures à 200°C + abaissement de la température en deux heures jusqu'à 25°C (durée du cycle: 14 heures),

échantillon 1C: ayant subi une recuisson en four à air ventilé avec montée en six heures à 250°C + palier de huit heures à 250°C + abaissement de la température en 2 H 30 mn jusqu'à 25°C (durée du cycle: 16 H 30 mn),

échantillon 1D: ayant subi une recuisson en four à air ventilé avec montée en huit heures à 275°C + palier de huit heures à 275°C + abaissement de la température en trois heures jusqu'à 25°C (durée totale du cycle: 19 heures),

échantillon 1E: ayant subi une recuisson sous vide suivant le cycle ci-dessous:

application du vide jusqu'à 0,1 millibar,

puis injection d'azote dans l'enceinte contenant l'échantillon (durée totale: 6 mn),

chauffage en atmosphère d'azote avec léger vide (850 millibars) de 25 à 250°C en 16 mn,

chauffage pour maintien de la température de 250°C pendant 6 mn,

application d'un vide de 0,1 millibar pendant 20 mn à une température comprise entre 250 et 235°C, injection d'azote dans l'enceinte jusqu'à une pression de 850 millibars en 1 mn,

refroidissement rapide de l'enceinte de 235°C à 75°C (en 18 mn), soit un cycle total de 1 H 07 mn.

Sur les cinq échantillons, il a été effectué avant et après traitement thermique les mesures dont les résultats sont rassemblés dans le tableau I ci-après:

## TABLEAU I

| N° des échantillons | 1A | 1B | 1C | 1D | 1E |
|---|---|---|---|---|---|
| Mesures effectuées | | | | | |
| Dureté IRHD avant traitement | 51 | 52 | 52 | 51 | 51 |
| Dureté IRHD après traitement | - | 59 | 62 | 61 | 64 |
| Perte de poids en % pendant le traitement | - | 2,39 | 2,87 | 3,80 | 1,96 |

En ce qui concerne la perte de poids, on est surpris de constater que la valeur la plus faible a été obtenue dans le traitement E (sous vide). Il y a eu, dans ce cas, départ des seules matières volatiles et non production de petites molécules distillables par cracking thermique ou cracking par oxydation.

Les différents échantillons ont été montés successivement comme joint de double vitre de porte de cuisinière. On effectue un essai de chauffage de 8 H à 270°C (thermocouple placé dans le moufle) et on observe après refroidissement l'opacité des vitres, le dépôt blanchâtre se déposant sur ces vitres.

Les résultats sont les suivants:

échantillon 1A: la paroi intérieure de la vitre extérieure se recouvre de petits cristaux blancs légèrement huileux rendant l'ensemble double vitre opaque,

échantillon 1B: on observe le même phénomène, mais à un degré moindre,

échantillon 1C et 1D: il apparait des traces non négligeables de cristaux blancs,

échantillon 1E: les vitres restent parfaitement claires.

Les cristaux déposés recueillis sont solubles dans les solvants usuels tels que le toluène et le trichloréthylène. A l'examen en spectrographie IR et UV des cristaux issus de d'échantillon 1A, il a été noté essentiellement et an quantités importantes des unités diméthylsiloxane et de l'acide dichloro-2-4-benzoïque. Les hydrocarbures dégagés tels que méthane, éthane ... ne sont évidemment pas dans les résidus.

Exemple 2

Un tube 6 × 9 mm (épaisseur de paroi: 1,5 mm) a été extrudé et rétifié par défilement en continu pendant 63 secondes à 245°C dans un (tunnel à air chaud muni d'une bande transporteuse en acier inoxydable. Le tube était réalisé et un élastomère transparent de référence R. 402/60 de WACKER CHEMIE contenant 1,30% de peroxyde de dichloro-2-4-benzoyle flegmatisé comme dans l'exemple No. 1.

Le tube obtenue a été divisé en trois parties:

échantillon 2A: tel que transformé ci-dessus et non recuit. Ce produit devient blanchâtre et opaque au bout de quatre jours de stockage à température ordinaire.

échantillon 2B: a subi un traitement de recuisson dans un four à air ventilé avec montée en 6 heures à 205°C + palier de 16 heures à cette température — abaissement de la température en trois heures jusqu'à 20°C. Le tube devient transparent au cours de cette opération.

échantillon 2C: a subi une recuisson sous vide suivant un cycle identique à celui de l'échantillon 1E; cependant, la température maximale a été de 200°C et la véritable dévolatilisation sous vide poussé (également $10^{-1}$ millibar) s'est opérée entre 184 et 182°C pendant 20 mn. Le tube est également devenue transparent.

Sur les trois échantillons 2A, 2B et 2C, on a effectué les mesures dont les résultats sont rassemblés dans le tableau II ci-après:

## TABLEAU II

| N° des échantillons | 2A | 2B | 2C |
|---|---|---|---|
| Mesures effectuées | | | |
| Dureté IRHD avant traitement thermique | 50 | 51 | 50 |
| Dureté après traitement | - | 57 | 61 |
| Perte de poids en % pendant le traitement | - | 2.68 | 1.29 |
| Perte de poids en % - 4 h à 200°C en étuve sur une partie de l'échantillon | 1,99 | 0,36 | 0,06 |
| Extrait au n-hexane - 4 h à reflux sur une 2ème partie de l'échantillon | 6,8 | 2,1 | 1,07 |

Les deux derniers essais du bas du tableau constituent des tests de contrôle des différentes Pharmacopées, notamment française (monographie Octobre 1976).

Les valeurs maximales admises sont respectivement de:

0,5% maximum pour la perte de poids à 200°C,

3% maximum pour l'extrait au n'hexane.

5

Il apparaît que le traitement sous vide permet d'obtenir aisément des valeurs nettement inférieures aux seuils maxima fixés par la Pharmacopée française. Le produit obtenu peut être considéré comme plus pur, c'est-à-dire qu'il contient nettement moins d'unités de faible poids moléculaires susceptibles de paser par migration dans un liquide pharmaceutique ou le sang, ou encore d'entraîner une irritation tissulaire.

Les résultats du deuxième exemple confirment bien que le traitement thermique s'opère beaucoup mieux sous vide et à une température modérée en ce sens que l'on obtient une efficacité très grande dans le sens recherché et ceci en un temps très court. Le faible résultat de l'extrait à l'hexane est bien démonstratif de l'absence de dégradation induite.

Ces essais laissent bien apparaître tous les avantages du procédé de recuisson selon la présente invention auxquels s'ajoute un gain de temps important correspondant à de nettes économies d'énergie.

Exemple 3

Un tube 6 × 10 mm (épaisseur de paroi: 2 mm) de la composition ci-dessous a été extrudé et vulcanisé en autoclave vapeur pendant 15 mn à 151°C (pression absolue de la vapeur: 5,0 bar).

Composition:

| TECNOFLON, grade FOR LHF* | 100 parties en poids |
|---|---|
| MAGLITE D (magnésie) | 5 parties en poids |
| Hydroxyde de calcium | 2 parties en poids |
| Noir de carbone N 770 (ex. S.R.F.) | 5 parties en poids |
| Tétrastéarate de Pentaérythrol | 1 parties en poids |

* Il s'agit d'un élastomère organique fluoré à basse viscosité MOONEY contenant de l'accélérateur bisphénol commercialisé par la Société MONTEFLUOS.

Le tube extrudé et vulcanisé obtenu a été divisé en quatre échantillons: 3A, 3B, 3C, 3D.
échantillon 3A: ne subit aucun traitement,
échantillon 3B: subit une recuisson de 24 heures en étuve ventilée à 200°C,
échantillon 3C: a subi recuisson de 24 heures en étuve ventilée à 250°C,
échantillon 3D: a subi recuisson sous vide suivant le même cycle que l'échantillon 1E (voir exemple 1 précédent).

Sur ces échantillons, il a été effectué les mesures suivantes: dureté Shore A et perte de poids quatre heures à 250°C.

Les résultats sont donnés dans le tableau III ci-après:

## TABLEAU III

| N° des échantillons | 3A | 3B | 3C | 3D |
|---|---|---|---|---|
| Mesures effectuées | | | | |
| Dureté Shore A avant traitement thermique | 65 | 65 | 65 | 65 |
| Dureté Shore A après traitement thermique | - | 71 | 75 | 67 |
| Perte de poids en % pendant le traitement | - | 3,91 | 8,52 | 2,04 |
| Perte de poids en % - 4 h à 250°C en étuve sur une partie de l'échantillon | 3,24 | 1,24 | 0,81 | 0,93 |

La recuisson 24 heures à 250°C conduit à une perte de poids considérable et à une augmentation notable de la dureté Shore A. Au contraite, les recuissons à 200°C (échantillon 3B) et sous vide entre 235 et 250°C (échantillon 3D) paraissent plus douces et n'ont pas entraîné une modification trop importante des propriétés des vulcanisats. Cependant, l'échantillon 3D est resté nettement plus souple et plus nerveux que l'échantillon 3B.

A nouveau, on peut constater l'efficacité et la rapidité de la recuisson sous vide sans que la dégradation du produit ait été notablement initiée.

Des résultats semblables ont été obtenus avec plusieurs composition à base d'élastomères fluorés d'autres provenances tels que le VITON de la Sté DU PONT de Nemours ou le FLUOREL de la Sté 3M.

### Exemple 4

Un tube 4 × 6 mm (paroi 1 mm) réalisé avec la composition ci-après:

| | |
|---|---|
| MM 50 THT (RHONE POULENC) | 100,00 parties en poids |
| Peroxyde de dichloro-2-4-benzoyle flegmatisé (50%) | 1,30 parties en poids |
| Silice Millisil E 600 | 10,00 parties en poids |
| Pigment Bleu Outremer | 0,30 parties en poids |

a été extrudé et rétifié en continu comme dans l'exemple No. 2 en 22 secondes à 295°C. On a divisé l'échantillon obtenu en quatre parties: 4A, 4B, 4C, 4D.

Elles ont subi les premiers traitements suivants avant passage à la recuisson sous vide:

4A: aucun traitement (appelé non recuit).

4B: recuisson en four à air 8 h à 200°C avec montée et descente progressives de la température.

4C: recuisson en four à air 8 h à 250°C avec montée et descente progressives de la température.

4D: recuisson en four à air 8 h à 275°C avec montée et descente progressives de la température.

Le traitement sous vide et en atmosphère inerte appliqué ensuite sur tous les échantillons a eu lieu dans les conditions suivantes et ceci, après des recuissons classiques pour les échantillons 4B, 4C et 4D en four à air ventilé comme indiqué ci-dessus.

pompage jusqu'à obtention d'un vide poussé à 0,03 millibar (10 mn),

injection du gaz inerte (azote) jusqu'à une pression absolue de 1,20 bar — Durée: 0,5 mn,

chauffage de 20 à 276°C en raison de 16°C/mn, soi ne durée totale de 16 mn,

chauffage à 276°C pendant 6 mn,

pompage jusqu'à obtention d'un vide également poussé à 0,03 millibar (14 mn). Malgré un calorifugeage poussé de la chambre, la température tombe à 256°C,

injection d'azote pour retour à la pression de 1,20 bar et refroidissement de l'enceinte (durée: 10 mn),

abaissement de la pression absolue à 1 bar et ouverture de l'enceinte.

soit un cycle total de 57 mn.

Les résultats sont rassemblés dans le Tableau IV ci-après:

## TABLEAU IV

### TAUX DE VOLATILS  4 h à 250°C APRES TRAITEMENTS

| ECHANTILLONS | 4A | 4B | 4C | 4D |
|---|---|---|---|---|
| TRAITEMENTS | | | | |
| Non recuit (aucun traitement) | 2,84 | | | |
| Recuisson sous vide seulement | 0,12 | | | |
| Recuisson à 200°C | | 0,89 | | |
| Recuit à 200°C puis sous vide | | 0,09 | | |
| Recuit à 250°C | | | 0,27 | |
| Recuit à 250°C puis sous vide | | | 0,06 | |
| Recuit à 275°C | | | | 0,19 |
| Recuit à 275°C puis sous vide | | | | 0,02 |

Dans le cas du traitement poussé et prolongé sous vide, il a été obtenu des taux de matières volatiles extrêmement bas. Les valeurs sont nettement plus faibles (0,12%) que celles que l'on obtient par des recuissons classiques en air à 250°C (0,27%) ou à 275°C (0,19%). On peut également noter qu'un traitement sous vide à la suite d'une recuisson classique à 250 ou 275°C permet une plus grande dévolatilisation et une plus grande purification du produit car on y note des résultats aussi bas que 0,06 et 0,02%. Cette double recuisson peut être envisagée dans des cas particuliers où l'on recherche, quels que soient les moyens, des teneurs en matières volatiles excessivement basses et un degré de pureté impossible à atteindre jusqu'à présent.

### Exemple 5

Il a été réalisé par moulage par compression — 12 mn à 150°C, pression sur le matériau: 25 bar — une plaque composite d'épaisseur totale de 4,5 mm comportant:

une planche de mat de verre enrobé de résine polyester déjà pressée à chaud à une épaisseur de 1,5 mm,

une feuille de mélange silicone cru calandrée à une épaisseur de 3 mm (agent de rétification: 0,8% de peroxyde de dicumyle),

un tissu de verre désensimé à chaud comportant 8 fils/cm aussi bien en chaîne que dans le sens de la trame.

Un tel matériau composite est utilisé comme amortisseur des balais en graphite dans certains moteurs électriques, classes F ou H. Il est nécessaire, comme cela a été exposé précédemment, d'obtenir une bonne dévolatilisation de l'élastomère silicone. Ceci a été possible sous vide à une température aussi basse que 140°C sans altérer les propriétés mécaniques du "mat verre — polyester" dont la dégradation est notable par exposition à l'air chaud au-dessus de 150—160°C.

Dans la plaque de matériau composite réalisée comme indiqué ci-dessus, il a été découpé à la meule diamantée de petits échantillons carrés de 25 × 25 mm que l'on a repéré comme suit en fonction des traitements thermiques prévus:

5A: sans traitement thermique,

5B: traitement en étuve 4 h à 150°C avec montée progressive de la température de 24 à 150°C en 3 h.

5C: traitement en étuve 4 h à 175°C avec montée progressive de la température de 24 à 175°C en 4 h.

5D: traitement en étuve 4 h à 200°C avec montée progressive de la température de 24 à 200°C en 5 h.

5E: traitement sous vide dans les conditions ci-dessous:

chargement des échantillons dans l'enceinte et application du vide jusqu'à 5 millibars (durée: 3 mn), injection de gaz inerte (dioxyde de carbone) jusqu'à 1 bar (pression absolue),

chauffage de 23 à 148°C (4 mn) et maintien de cette température pendant 10 mn,

application du vide jusqu'à 5 millibars (durée: 4 mn),

maintien du vide pendant 15 mn, la température dans l'enceinte descendant progressivement de 148 à 143°C,

injection de dioxyde de carbone jusqu'à la pression de 1 bar,

refroidissement de l'enceinte de 143°C à 45°C (durée 5 mn), soit un cycle total de 42 mn.

Sur les cinq séries échantillons, il a été séparé à l'aide d'une lame bien affutée (cutter) la partie rigide "mat de verre — polyester" de la fueille d'élastomère silicone dans laquelle reste emprisonnéea en surface le tissu de verre. Sur cet ensemble silicone et tissu de verre (masse relative négligeable, teneur en volatils nulle), il a été mesuré la perte de poids par étuvage 2 h à 150°C. Les résultats obtenus sont les suivants; y a été ajoutée une appréciation sur la tenue mécanique du "mat de verre — polyester" séparé comme indiqué ci-dessus.

## TABLEAU V

| N° des échantillons | 5A | 5B | 5C | 5D | 5E |
|---|---|---|---|---|---|
| Essais | | | | | |
| Teneur en matières volatiles % (essai en étuve 2 h à 150°C) | 1,40 | 0,83 | 0,35 | 0,12 | 0,15 |
| Tenue mécanique du "mat de verre - polyester": | bonne | bonne | assez bonne | fra- gile ; début de décom posi- tion | bonne |

Dans ce cas, le traitement sous vide a permis d'obtenir une teneur en matières volatiles basse sans altération du support rigide "mat de verre — résine polyester", avec élimination simultanée des matières volatiles de cette résine.

Un autre avantage très important du procédé selon l'invention réside dans la facilité de recueillir ou de séparer les impuretés partant sous forme de gaz ou de fumée.

En effet, avant d'être rejeté dans l'atmosphère, l'air chaud pollué sortant du four classique en quantités abondantes, par exemple 200 m³/h pour 100 kg de pièces vulcanisées placées dans un four de 2 m³, conduit à un volume de 2400 m³ pendant un cycle de 12 h.

Ces 2400 m³ devront être purifiés, traités dans une tour de lavage, dans un caisson muni de filtres ou par tout autre procédé.

Dans le cas de la recuisson sous vide, la quantité de gaz à traiter dans les conditions quantitatives identiques (100 kg de pièces dans une enceinte de 2 m³ et avec un cycle de 1 h 30 mn) ne sera plus que de l'ordre de 6 m³.

L'unité de purification du gaz pollué sera évidemment beaucoup moins coûteuse et plus efficace dans le cas du nouveau procédé.

En outre, dans le cas des articles en élastomères pour lesquels est exigée une propreté absolue (domaines: Médical, Electronique ou Spatial par exemple), l'introduction de gaz pur et extrêmement propre constitue un autre avantage indéniable.

Il a été également indiqué que le traitement sous vide en l'absence d'oxygène n'induisait plus la formation de matières volatiles nouvelles laquelle aurait évidemment entraîné une pollution supplémentaire de l'air ou du gaz.

D'autre part, puisqu'il n'est plus nécessaire de renouveler l'air et d'assurer une circulation directionnelle dans le four, les pièces en élastomères (couronnes de tubes ou de profilés, pièces moulées . . .) peuvent être entassées ou disposées sans laisser de volume libre excessif.

On a pu évaluer que tous ces facteurs conduisaient à une économie d'energie considérable, de l'ordre de 80 à 90% suivant les cas.

Le fait d'assurer le chauffage en atmosphère inerte ou bien sous vide, c'est-à-dire en l'absence pratiquement totale d'oxygène, supprime les risques d'incendies ou d'explosions que l'on a rencontrés dans le procédé usuel de recuisson en air chaud, les polysiloxanes cycliques ou linéaires dégagés ou formés pendant la recuisson des élastomères organo-siliques étant aisément inflammables en présence du comburant "oxygène".

Ce phénomène a lieu dans la réalité malgré que le copolymère siloxane ait été lui même dévolatilisé en continu au moment de sa production.

Il en est de même avec les élastomères ou les plastomères organiques contenant généralement des teneurs notables de plastifiants.

Un autre avantage de l'invention réside dans le fait qu'il est très aisé, quand on le désire, d'effectuer ainsi le traitement thermique en l'absence de traces d'humidité; or, celles-ci ont tendance à accélérer la dégradation à chaud de certains élastomères et surtout de plastomères tels que les polyuréthanes.

L'invention concerne également les élastomères et plastomères ayant été soumis au procédé de recuisson selon l'invention et qui se caractérisent en ce qu'ils sont pratiquement dépourvus de matières volatiles à température élevée.

**Revendications**

1. Procédé de recuisson de produits en élastomères rétifiés, ou en plastomères résistant à la chaleur, par action de la chaleur et du vide, caractérisé en ce qu'on réalise la succession des étapes suivantes:

introduction des produits dans une enceinte sous vide calorifugée

pompage de l'air dans l'enceinte, jusqu'à obtention d'une pression comprise entre 0,01 et 200 mbars, de préférence entre 0,1 et 1 mbar.

introduction dans l'enceinte d'un gaz inerte jusqu'à une pression voisine de la pression atmosphérique, par exemple comprise entre 0,8 et 1,2 bars

chauffage dans l'enceinte sous atmosphère inerte des produits, ou pièces en lesdits produits, à une température comprise entre 140 et 260°C

pompage pour obtention et maintien dans l'enceinte d'une pression comprise entre 0,01 et 200 mbars, de préférence entre 0,1 et 1 mbar, notamment pendant une durée comprise entre 10 et 60 minutes

introduction dans l'enceinte du gaz inerte jusqu'à une pression voisine de la pression atmosphérique, par exemple comprise entre 0,8 et 1,2 bars

refroidissement de l'enceinte

enlèvement des produits de l'enceinte.

2. Procédé selon la revendication 1, caractérisé en ce que toutes les étapes de l'opération se déroulent en présence d'un gaz inerte.

3. Procédé selon la revendication 1 ou la revendication 2, caractérisé en ce que la durée totale de l'opération est inférieure à 3 heures.

4. Elastomères et plastomères ayant été soumis au procédé de recuisson selon l'une quelconque des revendications 1 à 3, caractérisés en ce qu'ils sont pratiquement dépourvus de matières volatiles à température élevée.

10

**Patentansprüche**

1. Verfahren der Wiedererhitzung von rektifizierten (vernetzten) Elastomeren oder gegenüber Hitze widerstandsfähigen Plastomeren durch Einwirkung von Hitze und Vakuum, dadurch gekennzeichnet, daß man die folgendenden aufeinanderfolgenden Schritte durchführt:

Einführung der Produkte in einen Behälter unter wärmeisolierendem Vakuum,

Einpumpen von Luft in den Behälter bis zu einem Druck zwischen 0,01 und 200 mbar, vorzugsweise zwischen 0,1 und 1 mbar,

Einführen eines inerten Gases in den Behälter bis zu einem dem Atmosphärendruck benachbarten Druck, z.B. zwischen 0,8 und 1,2 bar,

Erhitzen des Produktes oder von Teilen dieses Produktes in dem Behälter unter Inertgasatmosphäre bei einer Temperatur zwischen 140 und 260°C,

Einpumpen zur Erzielung und Aufrechterhaltung eines Druckes in dem Behälter zwischen 0,01 und 200 mbar, vorzugsweise zwischen 0,1 und 1 mbar, insbesondere während einer Dauer zwischen 10 und 60 min.,

Einführung eines Inertgases in den Behälter bis zu einem dem Atmosphärendruck benachbarten Druck, z.B. zwischen 0,8 und 1,2 bar,

Abkühlung des Behälters,

Entfernen der Produkte aus dem Behälter.

2. Verfahren nach Anspruch 1, dadurch gekennzeichnet, daß alle Stufen des Verfahrens in Gegenwart eines Inertgases durchgeführt werden.

3. Verfahren nach Anspruch 1 oder Anspruch 2, dadurch gekennzeichnet, daß die Gesamtdauer des Verfahrens weniger als 3 Stunden beträgt.

4. Elastomere und Plastomere die dem Verfahren der Wiedererhitzung gemäß einem der Ansprüche 1 bis 3 unterworfen wurden, dadurch gekennzeichnet, daß sie praktisch frei sind von bei erhöhter Temperatur flüchtigen Produkten.

**Claims**

1. A secondary heating process for products made from elastomers possessing a network of plastomers resistant to heat, by the action of heat and vacuum, characterized in that the following stages are performed in succession:

introduction of the products into an evacuated enclosure insulated against loss of heat,

pumping out the air in the enclosure until a pressure between 0.01 and 200 millibars preferably between 0.1 and 1 millibar, is obtained,

introduction of an inert gas into the enclosure until a pressure of the order of atmospheric pressure, for example between 0.8 and 1.2 bars is obtained,

heating the products, or articles made of the said products, in the enclosure and in the inert atmosphere, to a temperature between 140 and 260°C,

pumping out the gas to obtain a pressure between 0.01 and 200 millibars, preferably between 0.1 and 1 millibar, in the enclosure and to maintain it particularly for a period between 10 and 60 minutes,

introduction of inert gas into the enclosure to a pressure of the order of atmospheric pressure, for example between 0.8 and 1.2 bars,

cooling of the enclosure,

removal of the products from the enclosure.

2. A process according to Claim 1, characterized in that all the stages of the operation take place in the presence of an inert gas.

3. A process according to Claim 1 or Claim 2, characterized in that the total duration of the process is less than 3 hours.

4. Elastomers and plastomers that have been subjected to the secondary heating process according to any of Claims 1 to 3, characterized in that they are pratically devoid of materials that are volatile at high temperature.